# EUROPEAN PATENT APPLICATION

(11) **EP 3 197 017 A1**
(43) Date of publication of application: **26.07.2017**
(21) Application number: 17152438.2
(22) Date of filing: 20.01.2017
(51) Int. Cl.: H02J 50/10

(54) **ELECTRICITY HARVESTING UNIT FOR A MEDIUM OR HIGH VOLTAGE CABLE, DETECTION DEVICE AND SYSTEM**

(30) Priority: 21.01.2016 IT UB20160273
(71) Applicant: IDEE & PROGETTI S.r.l., 25123 Brescia (IT)
(72) Inventor: Caraffini, Gianpaolo, I-38042 Baselga di Pinè, Trento (IT); Padula, Francesco, I-25128 Brescia (IT); Piccinelli, Riccardo, I-25086 Rezzato, Brescia (IT)
(74) Representative: Chimini, Francesco

(57) **Abstract**

An electricity harvesting unit (1) is connected in a suspended manner to a single electrical cable (2) through which an electrical non-direct current runs at medium or high voltage. The unit (1) comprises a conductor body (10) which can be connected to the electric cable (2) and suitable to accumulate electric charges from said cable (2). A storage capacitor (11) can be electrically connected to the conductor body (10) and to the electric cable (2) by means of an electric connection circuit (12) comprising conveying means (14) of a displacement current of the electrical charges between the conductor body (10) and the storage capacitor (11), to charge said storage capacitor (11).

A detection device (30) of parameters related to the status of the electric cable (2) or of the power line or to environmental conditions is powered by the electricity harvesting unit (1).

## Description

The present invention relates to an electricity harvesting (also known as energy harvesting) device for medium and high voltage electric cables; in particular, the invention relates to a device and a method of harvesting electricity from electric cables used on railway networks or on medium/high voltage electric cables for the distribution of electricity. In addition, the present invention relates to a detection and transmission device which can be installed on medium and high voltage electric cables and a measurement system thereof.

When dealing with medium or high voltage power lines, especially in the sphere of electrified railway lines and electricity networks (industrial, national, local, etc.), it is difficult to make direct measurements on the cables on an ongoing basis. The problems that arise are related mainly to:
- the presence of medium and high working voltages (several kV), with difficulty in isolating the power supply of the measuring system from the high voltage cable;
- the distance of the measuring points from the energy supply and/or telecommunications infrastructure;
- the physical difficulty of reaching the installation site of the sensor or transducer (the cable is installed on pylons or portals several metres above the ground).

There are wireless sensor solutions that solve in part the problem of data transmission, but the problem related to the power supply remains. In fact, some battery powered systems, besides requiring frequent maintenance for changing the batteries, have significant drawbacks due to the need to physically reach the device for maintenance purposes, with considerable expenditure of resources. Even solar-powered systems often require batteries, and in any case cannot be used everywhere (such as tunnels); they also present problems related to their poor resistance to the elements (dirt, snow, few hours of light in Nordic countries and in narrow valleys).

One of the purposes of the present invention is to devise a new method of storing electricity and powering a device applicable to medium and high voltage electric cables which overcomes the aforesaid limitations of the prior art.

According to the invention, such purpose is achieved by an electricity harvesting unit according to claim 1, a detection device according to claim 12, a measuring system according to claim 21 and a method according to claim 22.

Preferred embodiments of the invention are defined in the dependent claims.

The characteristics and advantages of the electricity harvesting unit, the method, the detection device and measuring system according to the present invention will be evident from the description given below, by way of a non-limiting example, according to the appended drawings, wherein:
- Figure 1 shows a wiring diagram of the electricity harvesting unit according to one embodiment of the present invention;
- Figure 1a shows a wiring diagram of the electricity harvesting unit according to another embodiment of the present invention suitable to be connected to the adaptor circuit in figure 1;
- Figure 2 shows a block diagram of the detection device according to one embodiment of the present invention;

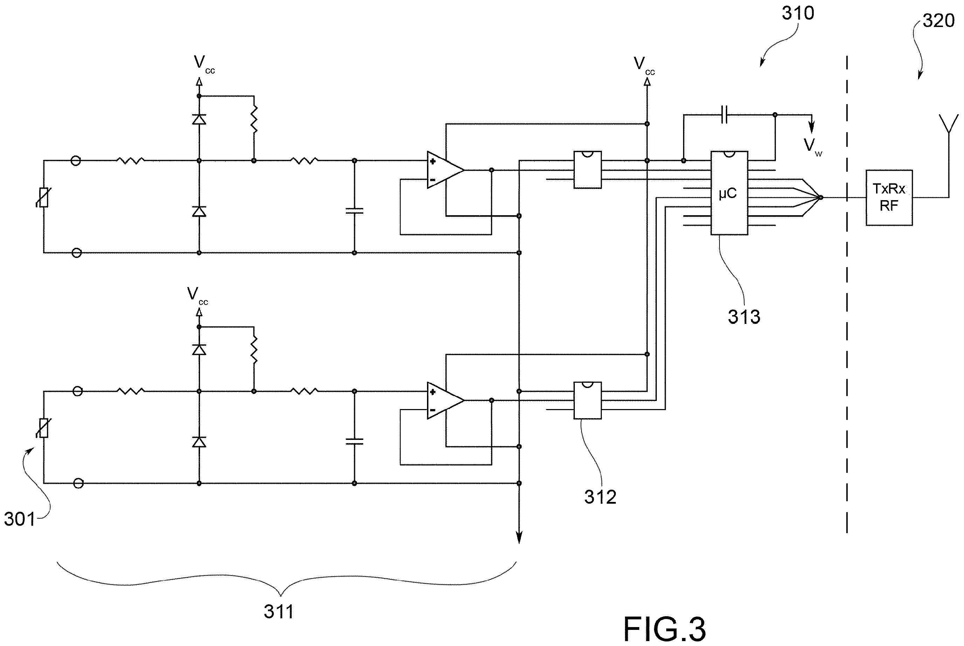

- Figure 3 shows a wiring diagram of the detection and control unit and of the wireless communication unit according to one embodiment of the present invention;
- Figure 4 shows in schematic form a front view of the detection device anchored to a railway contact wire, according to one embodiment of the present invention;
- Figure 5 shows in schematic form a side view of the detection device anchored to a railway contact wire, according to one embodiment of the present invention;
- Figure 5a shows in schematic form a cross-section view of the detection device in figure 5;
- Figure 6 shows in schematic form an embodiment of the anchoring means of the detection device anchored to a railway contact wire.

With reference to the appended drawings, reference numeral 1 globally denotes an electricity harvesting unit connected in a suspended manner to a single electrical cable 2 through which a non-direct electrical current runs at medium or high voltage(for example an a.c. current, or a d.c. with portions where there are voltage spikes).

Such electricity harvesting unit 1 is preferably destined to draw electricity from each individual electric railway line which the pantograph of locomotives slides on or from each individual medium or high voltage cable (e.g. from 10 to 30 kV) of the electricity distribution network. In other words, the unit 1 according to the present invention can be installed on a single electrical cable and is suitable to harvest electricity through a single electric cable without it being earthed or with any other cable conducting electricity.

The electricity harvesting unit 1 comprises a conductor body 10 which can be electrically connected to the electric cable 2 and is suitable to accumulate electric charges from said electric cable 2, when connected.

The unit 1 further comprises a storage capacitor 11 which can be electrically connected to the conductor body 10 and to the electric cable 2, and also an electrical connection circuit 12 suitable to electrically connect the conductor body 10, the storage capacitor 11 and the electric cable 2 each other. The electric connection circuit 12 comprises conveying means 14 of a displacement current of said electrical charges between the conductor body 10 and the storage capacitor 11, to charge the storage capacitor 11 as a result of said displacement current.

Without the need to limit oneself to a particular scientific theory, the inventors have verified that once the conductor body 10 has been charged with electric charges through connection to the electric cable 2 and having subsequently temporarily isolated the conductor body 10 from the electric cable through appropriate conveying means (such as a diode 14a), as a result of the change in electrical potential on the electric cable 2 a small displacement current of charges is generated between the conductor body 10 and the storage capacitor 11, allowing the charging of such storage capacitor 11.

In other words, the capacitive effect of the conductor body 10 is used to redistribute the charge accumulated thanks to such capacitive effect, on the storage capacitor 11.

Preferably, the conductor body is a metallic plate, for example of reduced thickness (1 to 5mm) and with a diameter greater than 5cm, or a metal sheet in the shape of an inverted bowl.

In addition, preferably, the conductor body 10 has rounded outer edges or appropriate shaping of the outer edges, such as to limit as much as possible the dispersive power of the tips.

Preferably, in the case in which the electric voltage has a waveform comprising a trailing edge and a leading edge (for example in the case of a spike, or in the case of alternate voltage, for example sinusoidal), during the leading edge the electric connection circuit 12 is suitable to channel the flow of charges to charge the conductor body 10 with a certain amount of electrical charge and during the trailing edge, the conveying means 14 are suitable to redistribute the charge stored the first charging phase on the storage capacitor 11.

In an equivalent manner, in an embodiment variant, during the trailing edge, the electric connection circuit 12 is suitable to channel the charge flow to charge the conductor body 10 with a certain amount of electric charge and, during the leading edge, the conveying means 14 are suitable to redistribute the charge stored in the first charging phase on the storage capacitor 11.

Preferably, the conveying means 14 comprise a first interruption device of the flow of electric charges from the electric cable 2 to the conductor body 10 and/or vice versa and a second interruption device of the flow of electric charges from the conductor body 10 to the storage capacitor 11 and/or vice versa.

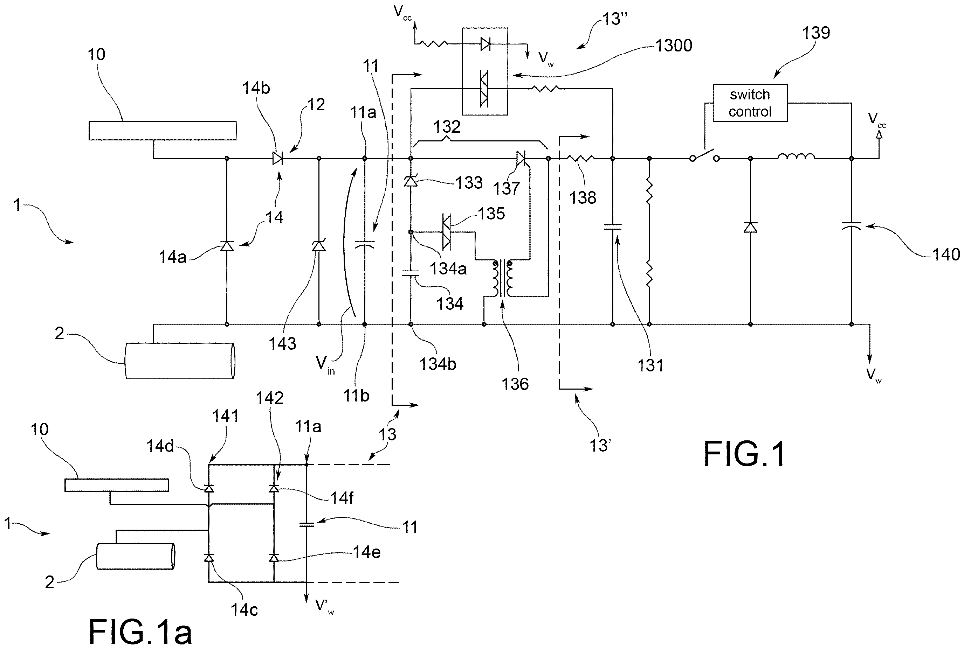

In the specific case illustrated in figure 1, the first interruption device is a diode 14a which conducts during the leading edge of the voltage to charge the conductor body 10. Conversely, on the trailing edge, once a certain threshold value of the voltage on the electric cable 2 is reached, the diode 14a is cut out and the electrical charges on the conductor body 10 are redistributed generating a displacement current through the diode 14b (second interruption device) suitable to charge the storage capacitor 11 (e.g. a capacitor of 470µF, 350V).

In a further embodiment, the conveying means 14 comprise four interruption devices of the flow of charges, for example four diodes arranged in a bridge configuration, wherein two opposite ends of the bridge are connected between the electric cable 2 and the conductor body 10 and the other two opposite ends of the bridge are connected to the ends of the storage capacitor 11. In particular, figure 1a shows an embodiment example of the invention using 4 diodes in a bridge configuration, wherein the electric cable 2 is connected between the cathode and anode respectively of a first diode 14c and a second diode 14d of a branch 141 of the bridge and the conductor body 10 is connected between the cathode and anode respectively of a third diode 14e and a fourth diode 14f of the other branch 142 of the bridge.

In this embodiment, the charging of the conductor body 10 and the redistribution on the storage capacitor 11 of the charges accumulated on the conductor body take place both during the leading edge of the voltage and during the trailing edge.

Moreover, also in this embodiment, differently from the embodiment shown in figure 1, the storage capacitor 11 is not directly short-circuited to the electric cable 2, but the diode 14c is interposed between them. As a result, one of the two ends of the capacitor is not necessarily at the same potential Vw as the electric cable 2, but could be at a different potential Vw'. It is however understood that, in the following description, where reference is made to the potential Vw reference is meant, in an equivalent manner, to the potential Vw' (in the case of diodes in a full bridge configuration).

The electricity harvesting unit 1 further comprises an adaptor circuit 13, suitable to receive in input the input voltage Vin from the storage capacitor 11 and to present in output a given supply voltage VCC as a function of said input voltage Vin, such as a continuous and stable power supply voltage.

In other words, the adaptor circuit 13 is suitable to withdraw a certain amount of energy (or charge) from the storage capacitor 11 and to supply in output a certain amount of energy (or charge, or voltage), for example in a controllable manner, towards a secondary circuit 13' (such as a charge/current quantity or voltage regulation circuit).

Preferably, the adaptor circuit 13 is suitable to receive in input a supply voltage Vin from the storage capacitor 11 and to supply as output a given power supply voltage VCC (for example 3.3V) with respect to the voltage Vw of the electric cable 2 (preferably, the power supply voltage and/or the supply voltages are d.c. voltages).

In one embodiment (such as in figure 1), the adaptor circuit 13 comprises a circuit breaker 132. Such circuit breaker 132 is suitable to be activated upon exceeding a threshold charge of the storage capacitor 11 to redistribute a given amount of charge to the secondary circuit 13'.

Preferably, the circuit breaker 132 is suitable to redistribute a given amount of charge from the storage capacitor 11 to a control capacitor 131.

Moreover, the circuit breaker 132 is configured to limit the charging of the storage capacitor 11 so that between the ends of said storage capacitor a given charging voltage is not exceeded (for example 100V). For example, the limitation of the charging voltage value is realized by connecting in parallel to the storage capacitor 11 a series of a Zener diode 133 with a further interruption capacitor 134 having a much lower capacity than the capacity of the storage capacitor 11 (for example more than 100 times lower) and by means of a discharge circuit of the interruption capacitor 134 upon reaching a predetermined voltage value (for example 30V).

In a preferred variant, the interruption circuit 132 comprises the Zener diode 133 (for example a Zener diode with a breakdown voltage equal to 70V), the cathode of which is connected to one 11a of the ends of the storage capacitor 11 and the anode of which is connected to a first end 134a of the further interruption capacitor 134, having its other end 134b connected to the electric cable 2. The anode of the Zener diode 133 is also connected to one end of a DIAC 135, in turn having the other end connected to the primary side of a transformer 136 (e.g. the DIAC is chosen with a breakover voltage of 30V). In addition, the cathode of the Zener diode 133 is connected to a thyristor 137 (or SCR), whose gate terminal is controlled by the secondary side of the transformer 136. The operation of the circuit breaker 132 just described envisages that upon exceeding a charging threshold of the storage capacitor 11, and therefore upon exceeding a given voltage value at its ends (for example, 100V, in the case of a Zener diode with a breakdown at 70V and DIAC with breakover at 30V), the interruption capacitor 134 charges over time by means of the current flowing through the Zener diode 133 up to exceeding the breakover voltage value of the DIAC 135. Beyond said breakover voltage, a current pulse is generated on the primary side of the transformer 136 as a result of the discharge of the capacitor 134 through the DIAC 135 and through the primary side of the transformer. Such current pulse is reflected in an equivalent manner on the secondary side of the transformer, which in turn enables the thyristor 137, thereby enabling the redistribution of the charge accumulated on the storage capacitor 11 towards the control capacitor 131.

In an embodiment variant, the transformer 136 is replaced by any suitable decoupling circuit suitable to activate conduction by the thyristor 137, such as an optic insulator or equivalent optical or electromagnetic decoupling circuits. Similarly, the DIAC 135 is replaceable with an equivalent threshold cut-off circuit, for example a semiconductor circuit comprising diodes and transistors.

Preferably, a current limiting resistor 138 is connected between the circuit breaker 138 and the control capacitor 131 to limit the current flowing from the storage capacitor 11 to the control capacitor 131.

Preferably, the adaptor 13 further comprises a voltage regulator, preferably a voltage switching regulator 139, suitable to supply as output the power supply voltage VCC, possibly required by further electronic circuits. For example, the voltage regulator provides as output a given VCC voltage as long as the input voltage coming from the circuit breaker 132 is greater than or equal to a given voltage value (for example 20V). For example, the voltage switching regulator 139 is a DC/DC step-down regulator, connected in such a way as to supply a given power supply voltage VCC (for example equal to 3.3V) with respect to the voltage Vw of the electric cable 2.

In the embodiment in figure 1, the voltage regulator is suitable to receive in input the voltage at the ends of the control capacitor 131 to supply as output a continuous stable power supply voltage VCC.

In this case, the voltage switching regulator 139 provides as output a given VCC voltage as long as the voltage between the ends of the control capacitor 131 is greater than or equal to a given voltage value (for example 20V). Preferably, such control of the output voltage takes place by modulating the closing time of a solid state switch SW2 as a function of the voltage at the ends of a further output capacitor 140 and/or of the charge accumulated on the control capacitor 131.

In an embodiment variant, the adaptor circuit 13 further comprises a holding circuit 13", suitable to maintain the flow of current for the charge transfer between the storage capacitor 11 and the secondary circuit 13'. Preferably, said holding circuit comprises a current flow regulating device from the storage capacitor 11 to the secondary circuit 13', which is activated depending on the power supply voltage value VCC (for example, the current flow regulating device is activated/powered by the same power supply voltage VCC). This way, the holding circuit ensures the flow of current from the storage capacitor 11 to the secondary circuit 13'. Moreover, at the same time, the holding circuit ensures safe and effective interruption of the current flow from the storage capacitor 11 to the secondary circuit 13', for example by interrupting the VCC power supply.

Preferably, the holding circuit comprises a TRIAC 1300, controlled by the supply voltage VCC. In this configuration, once conduction by the thyristor 137 has been activated, and therefore, once the correct power supply voltage VCC has been established, the charge redistribution current from the storage capacitor 11 to the secondary circuit 13' takes place through the TRIAC 1300. This way, the redistribution current of the charge flows from the storage capacitor to the secondary circuit 13' regardless of the state (conducting or not) of the thyristor 137.

Preferably, the storage capacitor 11, the electric connection circuit 12 and the adaptor circuit 13 are arranged on an electronic board 3 and the conductor body 10 is arranged in a manner spaced from said electronic board 3, for example by means of screws and fastening nuts 31.

In addition, preferably, the electronic board is contained in a watertight casing 4.

Additionally, a protection device, for example a zener diode 143, is connected in parallel to the storage capacitor 11 to prevent overvoltages which could damage the storage capacitor 11.

The present invention also relates to a detection device 30 which can be installed on a single electrical cable 2 of a power line, through which a non-direct electrical current runs at medium or high voltage.

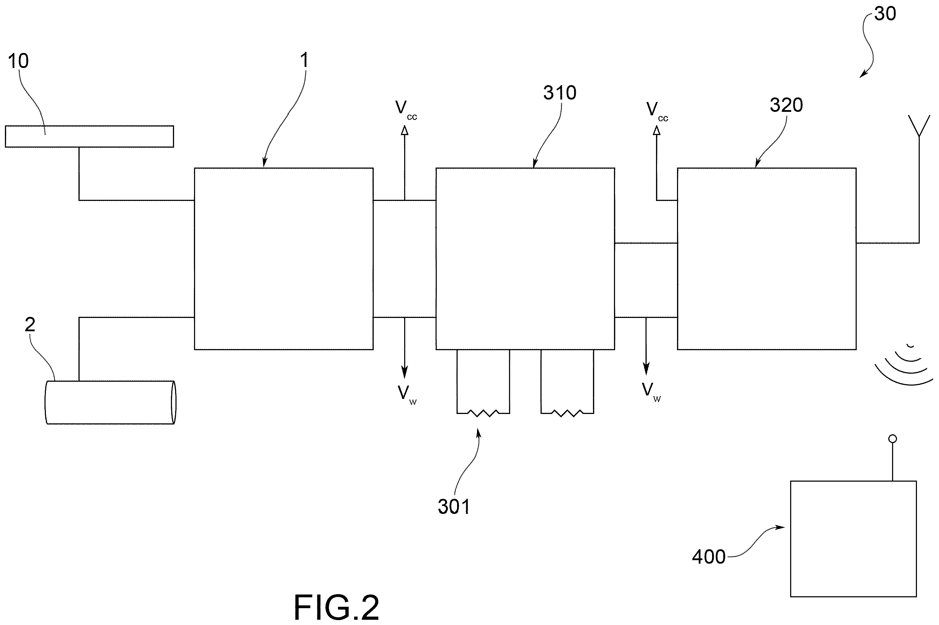

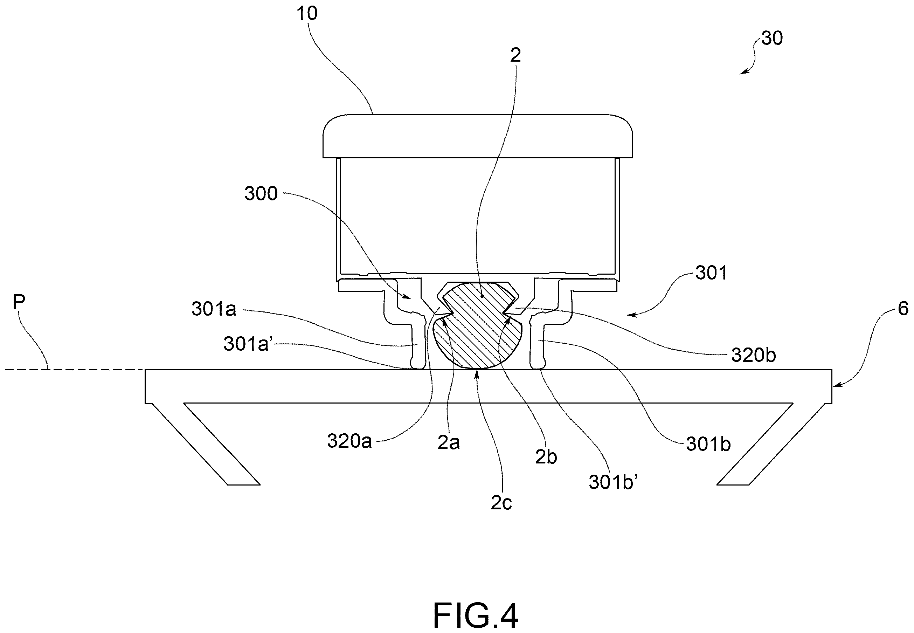

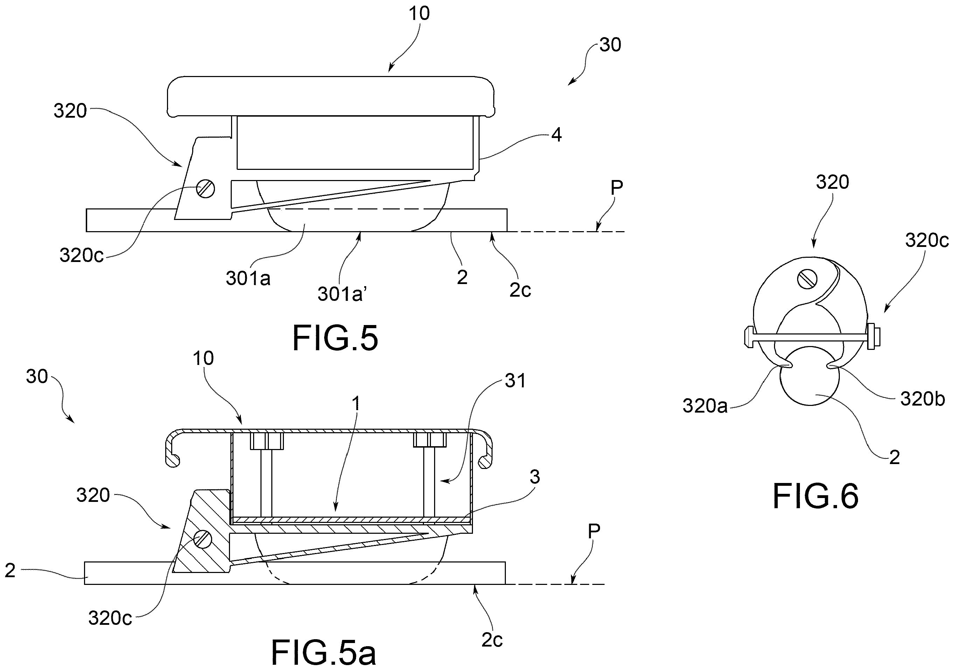

A block diagram of the electrical units that compose the device is illustrated for example in figure 2, while figures 4 to 5a illustrate an example of embodiment of the mechanical interfaces.

Such detection device 30 comprises an energy harvesting unit 1 having the features already described in the previous paragraphs and anchoring means 300, suitable to anchor the device 30 to the electric cable 2. The device 30 further comprises at least a detector 301 suitable for detecting at least one parameter relative to the status of the electric cable 2 or the power line (e.g. wear, voltage, or current, or capacitance, or impedance/resistance values) or environmental conditions (such as outdoor environmental temperature, or temperature of the electronic board, speed and/or wind direction, or humidity, or any atmospheric condition).

It is understood that the detector, in one embodiment thereof, being suitable to detect at least one parameter relating to the status of the power line, is also suitable to detect at least one parameter related to the state of another electric cable different from the electric cable 2 to which said detection device 30 is anchored. In other words, the detector is for example directly connected to another electric cable from which detects a parameter related to its status (for example wear) and is also electrically connected to the energy harvesting unit 1, the latter for example positioned in the vicinity of the electric cable 2.

A processing unit 310 is associated to the detector 301 and is suitable to acquire the signals detected by the detector 301.

Preferably, the detection device 30 comprises storage means, operatively connected to the processing unit 310 to store the signals acquired by the processing unit 310. Such storage means are for example configured to be accessible by means of an external device for the transfer of the stored data.

In one embodiment, regardless of the presence or not of the aforesaid storage means, the detection device 30 further comprises a wireless communication unit 320, suitable to communicate with a remote receiving device 400. Such communication unit 320 is suitable to send the signals acquired by the processing unit 310 to said remote receiving device 400 (for example, a radio wave receiving station, or a satellite receiving station, or a GSM/GPRS signal receiving station). Furthermore, in the variant which provides for the storage means, the wireless communication unit 320 is operatively connected to the storage means, for example by means of the processing unit.

The processing unit 310 and the transmission unit 320 are powered by the energy harvesting unit 1. This way, no other power sources external to the device are needed.

Preferably, the detector/s 310 present in the device 30 is/are chosen from the group comprising: a wear sensor, a temperature sensor, a humidity sensor, a wind speed sensor, an elapsed time detector, an electric voltage sensor, an electric current sensor, an impedance sensor, a capacity sensor, an image detection device (camera/video camera), an electromagnetic wave detection device (for example, a detection device of radiation in the infrared range) .

Preferably, the anchoring means comprise magnetic means suitable to anchor the device 30 to the electric cable 2 due to the magnetic force of attraction between the cable and the magnetic means (such as a permanent magnet). Such magnetic means are, for example, suitable to generate a magnetic attraction force with the ferromagnetic core of the suspended medium/high voltage electric cables.

In the case of railway electric cables (for example the "contact wire" in the railway sector, generally made of copper), the anchoring means 301 are suitable to stably anchor the railway electric cable so as not to detach upon the transit of the pantograph 6 of a railway locomotive.

Furthermore, in one embodiment, the anchoring means 301 are suitable to anchor in a stable manner the railway electric cable positioned above the "contact wire", i.e. the so-called "carrier rope" or catenary. In this case, for example, the detector 301 is connected to the contact wire, while the rest of the detection device 30 is anchored to the load-bearing rope.

In both the above cases, preferably, the anchoring means comprise a spring and/or screw pincer (or a terminal) (for example as shown in figures 4 to 6). Preferably, said pincers comprises pincer ends 320a, 320b, suitable to engage the railway electric cable in respective seats 2a, 2b made on the railway electric cable (for example the seats 2a, 2b are the seats already provided on the railway electric cable for anchoring the contact lines or suspensions by means of the respective feeder clamps).

Preferably, the seats 2a, 2b of the railway electric cable are recessed into the electrical cable so as to assume a concave shape and said pincer ends 320a, 320b, fit into said concave seats and are then tightened by means of screw or spring attachment means 320c to ensure an effective grip.

In the embodiment installable on the railway electric cable, one of the detectors 301 is a wear sensor of the railway cable and for example comprises at least one layer (for example, two layers 301a, 301b) in a consumable conductive material. Said layer is suitable to wear out upon the passage of the pantograph 6 of the locomotive.

Preferably, the consumable conductive material comprises a consumable conductive resin which allows the layer to consume itself by a quantity proportional (or equal) to the amount of wear of the railway cable upon the passage of the pantograph. For example, such a conductive resin comprises a polymer material (for example polyethylene) loaded with graphite.

In one embodiment of the layer/s (for example illustrated in figures 4 to 5a), each layer end 301a', 301b' is suitable to be placed in a tangential manner to the plane P tangent to the lower end 2c of the railway cable 2. Such lower end 2c is the part of the railway cable destined to come into contact by sliding with the pantograph 6 of the locomotive. In other words, the lower heights of the layer ends 301a', 301b' are arranged so as to remain aligned with the lower height of the lower end 2c of the railway cable.

In other words, the layers intended to measure the wear of the railway electric cable, are in soft material and will wear out at the same time and in the same amount as the contact cable.

In this embodiment variant, the processing unit 310 comprises a conditioning circuit 311, suitable to detect the variation in resistance of the layers 301a, 301b caused by the wear of said layers due to the passage of the pantograph.

In other words, the device 30 is suitable to perform a measurement of the reduction in diameter of said cable by measuring the reduction in volume of a sensor in conductive material, located at the sides and in the vicinity of said cable. This reduction in volume is measured as an impedance variation.

Preferably, the impedance (or resistance) variation is acquired by digital sampling (for example by ADC 312) and processed by a processing unit (for example a microcontroller 313), and subsequently sent to a remote receiving device 400 by means of the communication unit 320.

In an embodiment variant of the device 30, installed on an electric cable of a medium/high voltage line, the detector 301 is a device suitable to detect the charging time of the storage capacitor 11 and/or of the control capacitor 131 (for example it is a clock or a time counting circuit, or a clock associated with a microprocessor). This way, by measuring the charging time of the storage capacitor it is possible to indirectly detect the presence of a discharge to earth. In fact, the greater the charging time, the lower the voltage value flowing in the electric cable and therefore the greater the dispersion to earth.

In other words, the device is suitable to detect a voltage drop in the electric cable, for example due to a loss of insulation from the earth, caused by a fallen tree on the power line. Namely, the device 30 allows the detection of a partial or total discharge to earth in the electric cable on which the device is installed.

Additionally, preferably, the communication unit 320 is configured to be associated with a code, interpretable by the remote device 400 and suitable to be associated with the position of the communication unit 320 (and therefore of the device 30) along the electric cable 2. This way, the remote device is suitable to associate the measurement detected by the device 30 with a given position on the electric cable 2.

To install the device 30 on the electric cable it is possible to provide for both a manual installation by a human operator, or an installation comprising the use of unmanned aircraft (e.g. drones). In the latter case the method comprises the steps of transporting the device 30 onto a remotely driven aerial vehicle (or radio-controlled drone) as far as the vicinity of the installation point on the cable and releasing the device 30 from the aircraft. Preferably, the release of the detection device 30 takes place once said device 30 is firmly anchored to the cable by magnetic anchoring means or by other mechanical means (for example a spring pincer). In addition, the aircraft also allows the removal of the device from the electric cable.

Innovatively, the electricity harvesting unit according to the present invention makes it possible to take electric power from a single electric cable resolving all the drawbacks of the prior art relating to the maintenance of batteries or any other electricity storage methods. Furthermore, the electricity harvesting unit according to the invention makes it possible to power any device installed on the electric cable that needs to be powered at low voltage, avoiding problems related to how to provide electricity and the relative maintenance or insulation strategies thereof.

Advantageously, the harvesting unit is provided with a switch breaker with low power consumption when not active, which makes it possible to transfer in an effective manner the electricity accumulated on the storage capacitor to the control capacitor once the circuit breaker is enabled. In fact a mechanical type circuit breaker (for example a relay coil), would consume most of the electricity accumulated in the storage capacitor even when inactive, thereby preventing the accumulation of electricity or, in any case, requiring charging times incompatible with the application.

Unlike the prior detection systems (e.g. optical distance measuring systems, laser or thermal imaging, the detection device according to the present invention is suitable to carry out measurements of the parameters of interest in a continuous manner at different points of the line. The known measuring systems, instead, only allow "spot measurements".

Advantageously, the device according to the present invention makes it possible to monitor the temperature of the conductor cables (both in railway and electric spheres) on lines powered both in a.c. and d.c., providing at regular time intervals information on the entire network with a topographical location of the points measured, for the purposes of normal maintenance and real-time diagnosis of abnormal situations.

For example in the case of de-icing operations, the device is able to provide a measurement of the temperature and of the temperature trend over time, so as to optimize said de-icing process.

Again advantageously, the detection and transmission device according to the present invention makes it possible to monitor the wear of the railway contact wires by providing information on the entire network with a topographical location of the points measured (for example also by sending data at regular time intervals). This measurement can be used for normal maintenance and for real-time diagnosis of abnormal wear of the cables themselves.

In the systems of the prior art instead, the wear measurement of contact wires required on-site inspections by maintenance staff and required interruption of the circulation and disconnection of the railway line.

Conversely to the systems of the prior art therefore, the detection device according to the present invention is suitable to continuously monitor the wear status of the contact wire.

It is clear that a person skilled in the art may make modifications to the invention described above so as to satisfy specific and contingent requirements, all contained within the scope of protection as defined by the following claims.

## Claims

1. Electricity harvesting unit (1) connectable in a suspended manner to a single electrical cable (2) through which a non-direct electrical current runs at medium or high voltage, comprising:
- a conductor body (10) electrically connectable to the electric cable (2) and suitable to store electric charges from said electric cable (2), when connected;
- a storage capacitor (11) electrically connectable to the conductor body (10) and to the electric cable (2);
- an electrical connection circuit (12) suitable to electrically connect the conductor body (10), the storage capacitor (11) and the electric cable (2) each other; said electrical connection circuit (12) comprising conveying means (14) of a displacement current of said electrical charges between the conductor body (10) and the storage capacitor (11), to charge the storage capacitor (11) as a result of said displacement current.

2. Electricity harvesting unit (1) according to claim 1, further comprising an adaptor circuit (13), suitable to receive in input an input voltage (Vin) from the storage capacitor (11) and to present in output a given supply voltage (VCC) as a function of said input voltage (Vin).

3. Electricity harvesting unit (1) according to claim 2, wherein the adaptor circuit (13) comprises a circuit breaker (132) suitable to be activated upon exceeding a charge threshold of the storage capacitor (11) to redistribute a given amount of charge from the storage capacitor (11) to a secondary circuit (13').

4. Electricity harvesting unit (1) according to claim 3, wherein the circuit breaker (132) is configured to limit the charging of the storage capacitor (11) so that between the ends of said storage capacitor (11) a given charging voltage is not exceeded.

5. Electricity harvesting unit according to claim 3 or 4, wherein the adaptor circuit (13) comprises a voltage regulator (139), such as a step down DC/DC controller, suitable to provide in output a given voltage (VDC) as long as the input voltage (Vin) coming from the circuit breaker (132) is greater than or equal to a given voltage value (such as 20V).

6. Electricity harvesting unit (1) according to any of the preceding claims, wherein the medium or high voltage has a waveform comprising a trailing edge and a leading edge and wherein during the leading edge said electric connection circuit (12) is suitable to channel the flow of charges to charge the conductor body (10) with a certain amount of electrical charge and during the trailing edge, such conveying means (14) are suitable to redistribute the charge stored in the first charging phase to the storage capacitor (11).

7. Electricity harvesting unit (1) according to any of the preceding claims, wherein the conveying means (14) comprise:
- a first interruption device of the flow of electric charges from the electric cable (2) to the conductor body (10) and/or vice versa;
- a second interruption device of the flow of electric charges from the conductor body (10) to the storage capacitor (11) and/or vice versa.

8. Unit according to claim 7, wherein the first interruption device of the flow of electric charges and the second interruption device of the flow of electric charges are diodes (14a, 14b).

9. Unit according to claim 8, wherein the electric connection circuit comprises four diodes (14c, 14d, 14e, 14f) arranged in a bridge configuration, wherein two opposite ends of the bridge are connected between the electric cable (2) and the conductor (10) and the other two opposite ends of the bridge are connected to the ends of the storage capacitor (11).

10. Unit according to any of the preceding claims, wherein the conductor body (10) is a metal plate.

11. Detection device (30) installable on a single electrical cable (2) of a power line, through which an electrical non-direct current runs at medium or high voltage, comprising:
- an electricity harvesting device (1) according to any of the claims from 1 to 11,
- anchoring means (300), suitable to anchor the device (30) to the electric cable (2);
- at least one detector (301) for detecting at least one parameter of the status of the electric cable (2) or of the power line or of a further electric cable or related to environmental conditions;
- a processing unit (310), associated to the detector (301) and suitable to acquire the signals detected by the detector (301);
said processing unit (310) being powered by said electricity harvesting unit (1).

12. Detection device (30) according to claim 11, further comprising a wireless communication unit (320) towards a remote receiver device (400), said wireless communication unit (320) being powered by said electricity harvesting unit (1) and being suitable to send the signals acquired from the processing unit (310) to said remote receiver device (400).

13. Detection device (30) according to claim 11 or 12, wherein the at least one detector (301) is selected from the group comprising: a wear sensor, a temperature sensor, humidity sensor, wind speed sensor, an elapsed time detector, an electrical voltage sensor, an electric current sensor, an impedance sensor, a capacitance sensor.

14. Detection device (30) according to any of the claims from 11 to 13, wherein the anchoring means (300) comprise magnetic means suitable to anchor the device (30) to the cable (2) by effect of the magnetic force of attraction.

15. Detection device (30) according to any of the claims from 11 to 14, wherein the electric cable (2) is a railway electric cable and the anchoring means (300) are suitable to anchor in a stable manner the railway electric cable so as not to come off upon the transit of a pantograph (6) of a locomotive.
